# EUROPEAN PATENT APPLICATION

(11) **EP 3 208 994 A1**
(43) Date of publication of application: **23.08.2017**
(21) Application number: 17156566.6
(22) Date of filing: 16.02.2017
(51) Int. Cl.: H04L 29/06, G06F 17/30, H04W 8/20, H04W 36/00

(54) **METHODS CIRCUITS DEVICES SYSTEMS AND FUNCTIONALLY ASSOCIATED COMPUTER EXECUTABLE CODE TO SUPPORT EDGE COMPUTING ON A COMMUNICATION NETWORK**

(30) Priority: 16.02.2016 US 201662295522 P; 16.02.2016 US 201662295521 P
(71) Applicant: Saguna Networks Ltd., 20692 Yokneam Illit (IL)
(72) Inventor: Frydman, Daniel Nathan, 32447 Haifa (IL); Fite, Lior, 2010400 Zurit (IL)
(74) Representative: Dr. Graf & Partner AG

(57) **Abstract**

The present application discloses methods, circuits, devices, systems and functionally associated computer executable code to support edge computing on a communication network, such as a wireless access communication network. There are disclosed a data network architectures including: (a) at least one network core with one or more network elements to perform each of one or more network management functionalities; and (b) at least one network edge segment or zone including one or more access nodes, edge computing resources and a secure link gateway to convey to the core network elements information about data services provided by the edge computing resources to connected client devices.

## Description

### FIELD OF THE INVENTION

The present invention generally relates to the field of wireless communication. More specifically, the present invention relates to methods, circuits, devices, systems and functionally associated computer executable code to support edge computing on a communication network, such as a wireless access communication network.

### BACKGROUND

Since 2009, when for the first time the volume of data traffic over mobile network exceeded that of voice traffic, mobile data has more or less tripled each year in volume thus taking over more and more of the mobile traffic in volume. In addition, machine-to-machine solutions are maturing throughout vertical industries and as the emerging number of wireless sensors (grow exponentially over the next 10 years) which are key enablers to many mission-critical scenarios, from smarter traffic to video analytics, the issue just grows. Wireless sensors are expected to grow in their numbers exponentially over the next 10 years. On the profitability side mobile data opens new revenue possibilities to the MNOs. A major obstacle standing before the MNOs is their inability to connect to the content thus suffering from the Over The Top (OTT) syndrome. In addition, many of the applications generate data that withholds inflexible requirement on the way traffic should be served over the network. In order to enable adequate user experience, the data must be supplied to the UE according to strict bit-rate requirements. Any deviations from these requirements automatically lead to lousy experience thus to the abandonment of this service by consumers. This leads to the need for a solution which on one hand will ensure enhanced user experience when consuming data while presenting new revenue streams to the MNOs, and on the other hand will not degrade the network behavior and will not lead to unjustified expenses for the end users. The solutions that are being driven to the market are around the mobile edge computing/cloud, where virtualized infrastructure/cloud is integrated into the mobile RAN, enabling deploying services at the edge of the mobile network. This creates a new challenge for operators as now content and application are being provided to end users directly from within the RAN, without the network core elements having any visibility of the data.

End users are enjoying ever improving wireless data access but this does not come for free. 3G/4G operators usually bill there end user based on the data volume they consume. Based on the standards, charging is performed inside the cellular network on a per-flow basis. In today's mobile networks, charging solutions receive the required data/information from the core elements.

A solution needs to be provided so that charging/billing, which is currently happening adjacent to the network core, will continue working transparently.

### SUMMARY OF INVENTION

The present invention includes methods, circuits, devices, systems and functionally associated computer executable code to support edge computing on a communication network, such as a wireless access communication network. According to embodiments of the present invention, there may be provided a data network including: (a) at least one network core with one or more network elements to perform each of one or more network management functionalities; and (b) at least one network edge segment or zone, wherein an edge segment may include one or more access nodes, including wireless access node, through which a client communication device may connect to the network. The at least one network edge segment or zone may also include or be otherwise functionally associated with edge computing resources and/or computing platform(s), such as, for example one or more network edge servers. A network edge segment or zone also including processing or computing resources may be referred to as a network edge computing zone or segment. An edge computing resource of a specific network edge segment may run one or more server applications that provide data services to client applications running on a mobile communication device connected to an access node of the specific network edge segment, or to an access node of a network edge segment in communicative proximity. Connectivity to the internet and/or to an external network may also be referred to as a data service in accordance with the present invention.

According to some embodiments of the present invention, a network edge computing resource within a network edge computing zone may run or otherwise provide data services such as an application engine/server services, zone specific DNS services, an internet breakout gateway, etc. Information about the amount and/or nature of edge computing services being provided to a network client (mobile communication) device receiving services from a network edge computing resource/platform may be forwarded to the network core, for example through a communication link between the network edge and the network core. An Edge Processing Connectivity Manager (EPCM) according to embodiments of the present invention may select, copy, and forward data passing between an edge computing resource and a connected client device. The EPCM may include or be otherwise functionally associated with one or more monitoring modules which may monitor, intercept, copy and/or generate information characterizing data services being provided by the edge computing resources. The EPCM may include or be otherwise functionally associated with one or more management or control modules which may monitor and may control or regulate data services being provided by edge computing resources, optional in accordance with instructions from one or more network elements at the network core. The EPCM may also include or be otherwise functionally associated with a secure data link gateway for establishing a secure data link between a respective network processing edge segment/zone and the network core.

A network according to embodiments of the present invention may include one or more monitoring and/or one or more management modules to monitor and/or manage the network edge computing platform and/or the data services being provided by the computing resources to a mobile communication device connected to a related network access node. The monitoring and/or management modules, which may be integral or otherwise associated with an EPCM. According to yet further embodiments, the network may include a communication link between management modules running at an edge segment of the network and one or more monitoring and/or one or more management elements operating at or near the network core, thereby providing visibility, and optionally control, of the edge computing services being provided to mobile communications devices. According to some embodiments, a secure communication link between each of one or more network edge zones and a network core may be established through each of one or more gateways, located at network edge zones and at least one located at the network core. The information passing through the gateway and link may include copies of actual data sent to and/or received from the client mobile communication device. According to further embodiments, the information may include characterizations of data and/or data services provided to the client mobile communication device from one or more network edge computing resources. Data passing through a link according to embodiments of the present invention may include random data generated in order to obfuscate the source of data passing through the link. The data link between the network edge segment and elements at the network core may be a secure link for transporting actual payload data and/or fake data between the network edge and the core, optionally in an encrypted form. The secure data link may also include an encoder configured to de-correlate an instantaneous bitrate of the datalink bit-stream from an actual payload bitrate, thereby obfuscating the data sources of the data being carried over the data link.

According to embodiments, there may be provided a communication network comprising at least one network core with one or more network elements to perform each of one or more network management functions, and at least one network edge segment including: (a) one or more access nodes, (b) at least one edge computing resources, and (c) a secure link gateway to convey to the core network elements information about chargeable data services provided by the at least one edge computing resource to connected client devices.

The communication network's at least one edge computing resource may provide data services selected from the group consisting of: (a) application server data, (b) content server data, (c) data storage services, and (d) internet gateway services. At least one of the one or more network elements may perform network management functions of charging or billing.

According to embodiments, said at least one network edge includes edge computing monitoring modules to characterize data services provided by said edge computing resource for billing purposes. Said edge computing monitoring modules may be configured to send to said network core data characterizing services and service volumes provided by said edge computing resource to specific client devices.

### BRIEF DESCRIPTION OF THE FIGURES

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
Fig. 1A is a block level network diagram illustrating a communication network according to embodiments of the present invention;
Fig. 1B is a network element level diagram illustrating a wireless access (cellular) communication network in accordance with embodiments of the present invention;
Fig. 2 is a functional block diagram of a network edge connectivity manager in accordance with embodiments of the present invention managing data flow of data related to data services provided by edge computing resources and associated gateways;
Fig. 3 is a functional block diagram of an edge computing data gateway in accordance with embodiments of the present invention;
Fig. 4 is a data flow diagram for an exemplary network edge service billing related embodiment of the present invention;
Fig. 5 is another data flow diagram for an exemplary network edge service billing related embodiment of the present invention; and
Fig. 6 includes a table of CDR fields which may utilized as part of the billing solution of the present invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE FIGURES

In the following detailed description, numerous specific details are set forth in order to provide a thorough understanding of the invention. However, it will be understood by those skilled in the art that the present invention may be practiced without these specific details. In other instances, well-known methods, procedures, components and circuits have not been described in detail so as not to obscure the present invention.

Unless specifically stated otherwise, as apparent from the following discussions, it is appreciated that throughout the specification discussions utilizing terms such as "processing", "computing", "calculating", "determining", or the like, may refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

In addition, throughout the specification discussions utilizing terms such as "storing", "hosting", "caching", "saving", or the like, may refer to the action and/or processes of 'writing' and 'keeping' digital information on a computer or computing system, or similar electronic computing device, and may be interchangeably used. The term "plurality" may be used throughout the specification to describe two or more components, devices, elements, parameters and the like.

Some embodiments of the invention, for example, may take the form of an entirely hardware embodiment, an entirely software embodiment, or an embodiment including both hardware and software elements. Some embodiments may be implemented in software, which includes but is not limited to firmware, resident software, microcode, or the like.

Furthermore, some embodiments of the invention may take the form of a computer program product accessible from a computer-usable or computer-readable medium providing program code for use by or in connection with a computer or any instruction execution system. For example, a computer-usable or computer-readable medium may be or may include any apparatus that can contain, store, communicate, propagate, or transport the program for use by or in connection with the instruction execution system, apparatus, or device.

In some embodiments, the medium may be an electronic, magnetic, optical, electromagnetic, infrared, or semiconductor system (or apparatus or device) or a propagation medium. Some demonstrative examples of a computer-readable medium may include a semiconductor or solid state memory, magnetic tape, a removable computer diskette, a random access memory (RAM), a read-only memory (ROM), any composition and/or architecture of semiconductor based Non-Volatile Memory (NVM), any composition and/or architecture of biologically based Non-Volatile Memory (NVM), a rigid magnetic disk, and an optical disk. Some demonstrative examples of optical disks include compact disk - read only memory (CD-ROM), compact disk - read/write (CD-R/W), and DVD.

In some embodiments, a data processing system suitable for storing and/or executing program code may include at least one processor coupled directly or indirectly to memory elements, for example, through a system bus. The memory elements may include, for example, local memory employed during actual execution of the program code, bulk storage, and cache memories which may provide temporary storage of at least some program code in order to reduce the number of times code must be retrieved from bulk storage during execution.

In some embodiments, input/output or I/O devices (including but not limited to keyboards, displays, pointing devices, etc.) may be coupled to the system either directly or through intervening I/O controllers. In some embodiments, network adapters may be coupled to the system to enable the data processing system to become coupled to other data processing systems or remote printers or storage devices, for example, through intervening private or public networks. In some embodiments, modems, cable modems and Ethernet cards are demonstrative examples of types of network adapters. Other functionally suitable components may be used.

More specifically, the present invention includes methods, circuits, devices, systems and functionally associated computer executable code to support edge computing on a communication network, such as a wireless access communication network. According to embodiments of the present invention, there may be provided a data network including: (a) at least one network core with one or more network elements to perform each of one or more network management functionalities; and (b) at least one network edge segment or zone, wherein an edge segment may include one or more access nodes, including wireless access node, through which a client communication device may connect to the network. The at least one network edge segment or zone may also include or be otherwise functionally associated with edge computing resources and/or computing platform(s), such as, for example one or more network edge servers. A network edge segment or zone also including processing or computing resources may be referred to as a network edge computing zone or segment. An edge computing resource of a specific network edge segment may run one or more server applications that provide data services to a client applications running on a mobile communication device connected to an access node of the specific network edge segment, or to an access node of a network edge segment in communicative proximity. Connectivity to the internet and/or to an external network may also be referred to as a data service in accordance with the present invention.

According to some embodiments of the present invention, a network edge computing resource within a network edge computing zone may run or otherwise provide data services such as an application engine/server services, zone specific DNS services, an internet breakout gateway, etc. Information about the amount and/or nature of edge computing services being provided to a network client (mobile communication) device receiving services from a network edge computing resource/platform may be forwarded to the network core, for example through a communication link between the network edge and the network core. An Edge Processing Connectivity Manager (EPCM) according to embodiments of the present invention may select, copy, and forward data passing between an edge computing resource and a connected client device. The EPCM may include or be otherwise functionally associated with one or more monitoring modules which may monitor, intercept, copy and/or generate information characterizing data services being provided by the edge computing resources. The EPCM may include or be otherwise functionally associated with one or more management or control modules which may monitor and may control or regulate data services being provided by edge computing resources, optionally in accordance with instructions from one or more network elements at the network core. The EPCM may also include or be otherwise functionally associated with a secure data link gateway for establishing a secure data link between a respective network processing edge segment/zone and the network core.

A network according to embodiments of the present invention may include one or more monitoring and/or one or more management modules to monitor and/or manage the network edge computing platform and/or the data services being provided by the computing resources to a mobile communication device connected to a related network access node. The monitoring and/or management modules, which may be integral or otherwise associated with an EPCM, According to yet further embodiments, the network may include a communication link between management modules running at an edge segment of the network and one or more monitoring and/or one or more management elements operating at or near the network core, thereby providing visibility, and optionally control, of the edge computing services being provided to mobile communications devices. According to some embodiments, a secure communication link between a network edge zone and a network core may be established through gateways, at least one located at the network edge zone and another located at the network core. The information passing through the gateway and link may include copies of actual data sent to and/or received from the client mobile communication device. According to further embodiments, the information may include characterizations of data and/or data services provided to the client mobile communication device from one or more network edge computing resources. Data passing through a link according to embodiments of the present invention may include random data generated in order to obfuscate the source of data passing through the link. The data link between the network edge segment and elements at the network core may be a secure link for transporting actual payload data and/or fake data between the network edge and the core, optionally in an encrypted form. The secure data link may also include an encoder configured to de-correlate an instantaneous bitrate of the datalink bit-stream from an actual payload bitrate, thereby obfuscating the data sources of the data being carried over the data link.

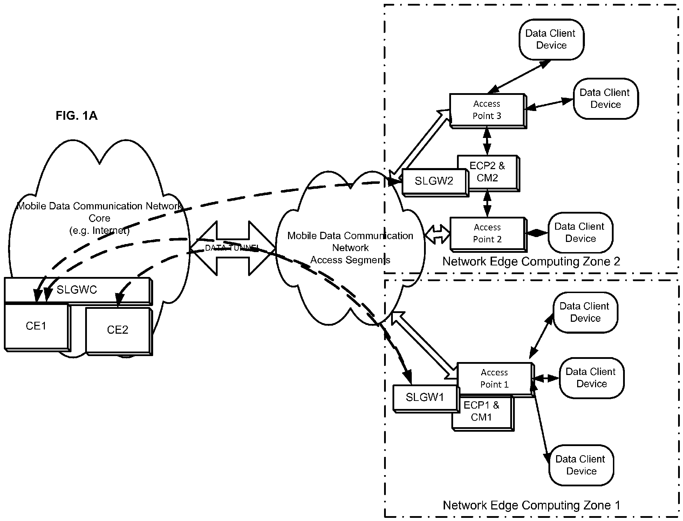

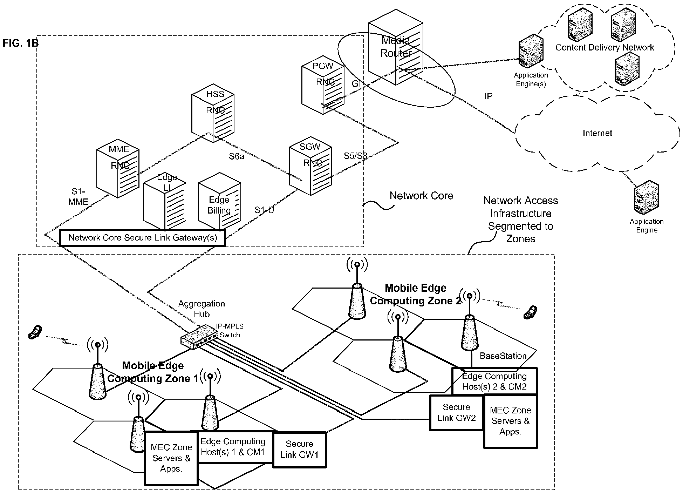

Turning now to Fig. 1A, there is shown a block level network diagram illustrating an exemplary communication network according to embodiments of the present invention. The communication network includes a network core with exemplary network core elements 1 and 2, each of which core elements might perform one of several possible network management tasks, including client billing, Legal Inspection (e.g.), client device authentication, client device access management to network services, etc. The exemplary network also includes two network edge computing zones, 1 and 2, each of which includes network access points, edge computing platforms (EPC1 and EPC2), and Connectivity Managers (CM1 and CM2). Each edge computing zone also includes a secure link gateway (SLGW1 and SLGW2) to provide a secure data link between a respective zone and the core. Fig. 1B is a network element level diagram illustrating a wireless access (cellular) communication network in accordance with embodiments of the present invention. It shows a specific cellular network embodiment of the exemplary network of Fig 1A, where the access points are cellular wireless access points and the core network elements are clearly shown as billing and Legal Inspection network elements.

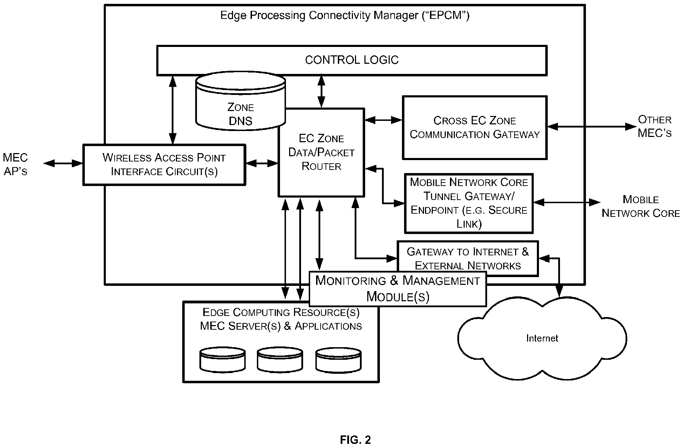

Turning now to Fig. 2, there is shown a functional block diagram of a network edge processing connectivity manager (EPCM) in accordance with embodiments of the present invention, wherein the EPCM manages data flow of data related to data services provided by edge computing resources and associated network gateways. The EPCM includes interfaces to: (a) associated network access points and their respective client devices; (b) associated edge computing resources, and (c) gateways to the network core and other network segments. The EPCM may also include an interface to an internet breakout gateway. The EPCM may also include gateways to other network edge segments or zones.

The EPCM according to the embodiment of Fig. 2 includes Control logic controlling an edge computing data/packet router to regulate data flow between edge computing resources and client devices communicatively coupled to associated access points, wireless or otherwise. The EPCM Control Logic working in conjunction with one or more monitoring modules may also send copies and/or characterizations of data flowing between edge computing resources and client devices towards the network core via a secure data link established via a secure link gateway.

The EPCM according to Fig. 2 also includes edge computing monitoring modules to collect and/or characterize data services provide by edge computing resources to commutatively coupled data client devices. The EPCM may selectively collect and send edge data to the core, for example in response to a request from a network element at the network core. Edge data for monitoring, copying, characterizing and sending may be selected according to categories such as: (a) client device identifier, (b) data service type, (c) external data source identifier, (d) detected content characteristic, and (e) any combination of the four. Alternatively, the EPCM may be programmed to provide copies and/or characterizations of all data exchanged between edge computing resources and client devices communicatively coupled to access points of the respective network edge.

The EPCM according to Fig. 2 also includes edge computing management modules to monitor and regulate services provide by edge computing resources to commutatively coupled data client devices. The EPCM may selectively monitor, manage and/or report back on data edge services, for example in response to a request from a network element at the network core. Edge computing service management may be performed according to parameters such as: (a) client device identifier, (b) edge data service source, (c) external data source identifier, (d) detected content characteristic, and (e) any combination of the four. Alternatively, the EPCM may be pre-programmed to monitor and manage a fixed set of edge computing resources and client devices communicatively coupled to access points of the respective network edge.

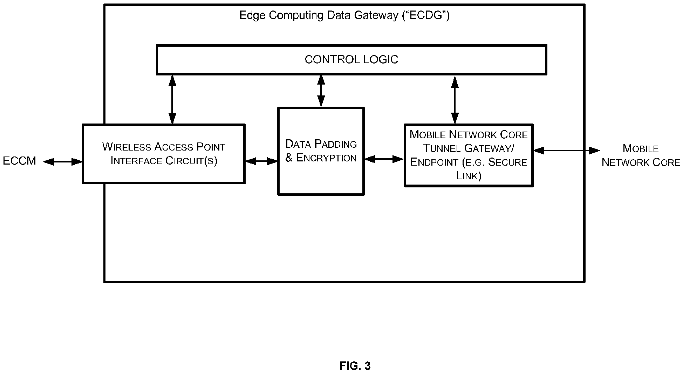

Turning now to Fig. 3, there is shown a functional block diagram of an edge computing secure data link gateway in accordance with embodiments of the present invention. The gateway includes an interface to the network edge segment or zone and an interface to a communication channel to the network core. The communication channel to the network core may be any type of IP tunnel known for use to interconnect cellular access nodes to a cellular network core. The gateway includes data encryption/decryption functionality, in the form of circuits and/or modules, to encrypt and secure from interception data exchanged between the edge segment/zone and the network core. The gateway includes data padding functionality, in the form of circuits and/or modules, to pad and de-correlate a transmission bitrate from a payload bit rate. According to some embodiments, the decorrelation of the payload bitrate and the transmission bitrate is configured to obfuscate a source of payload data being transmitted through the gateway and associated communication link, for example, the de-correlation may be performed by padding the transmission bit-stream with fake or dummy bits such that the transmission bitrate is maintained substantially constant over some period of time. Such de-correlation would obfuscate or hide which communicatively coupled client device generated and/or received payload data which is currently passing through the link.

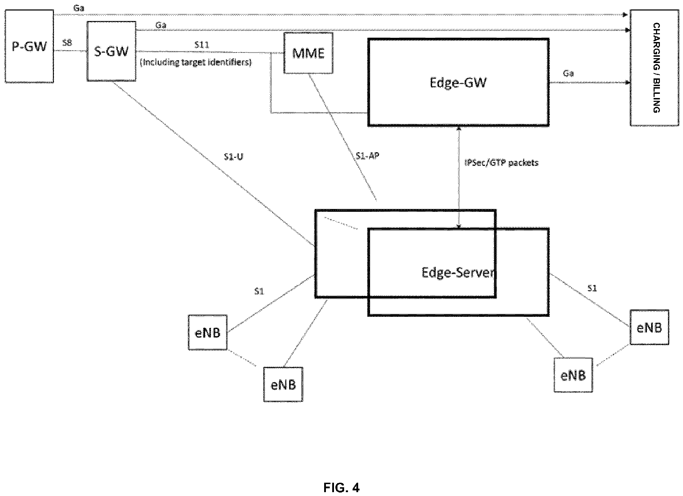

Turning now to Fig. 4, there is shown an exemplary network edge service billing or charging related embodiment of the present invention. The embodiment of Fig. 4 enables fully transparently supporting billing/charging within a network providing data services from computing resources inside the network edge or RAN. Since networks which enable providing applications and/or content to end users from within the RAN are required to support current charging solutions which are at the core in a transparent manner, core based charging systems must "have vision" of anything that is being supplied from the edge cloud directly to the end users. The embodiment of Fig. 4 includes an Edge-GW (EG) and Edge-Servers (ESs). The ESs are nodes located in the RAN that support the hosting of applications inside the RAN in a fully transparent way to the mobile network. The EG is a node located adjacent to the network core that ensures all core functionalities (LI, charging, policy, mobility etc.) continue working transparently.

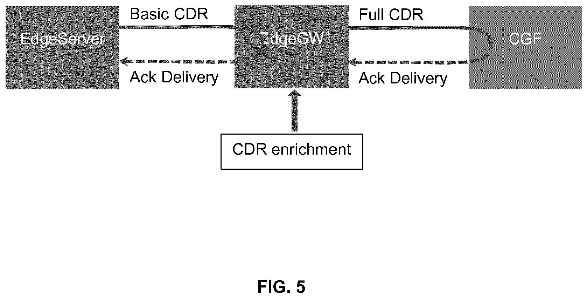

The call detail record (CDR) is the basis for network usage charging. As such, it is critical to every service provider that CDR's will arrive correctly to the billing system. In order to keep maximum compatibility with existing network elements and to allow maximum granularity for the billing system to charge correctly, the CDR's may be based on Application Based Charging (TDF-CDR). CDR reporting is assured at all times and the CDR delivery is verified on a per CDR basis. Since the TDF-CDR requires a great deal of information, this task shall be split between the ES and EG. Figs. 4 and 5 illustrate a CDR flow according to embodiments of the presentation invention, emphasizing this split functions between the network entities.

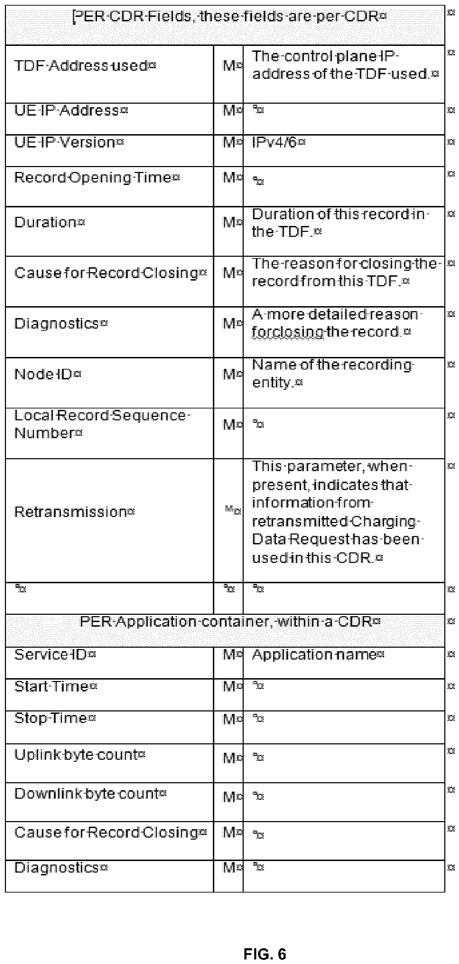

The ES of the embodiment of Figs. 4 and 5 generate a basic CDR according to the defined CDR triggers for opening and closing of CDR's. The CDR contains the basic consumption information that may be gathered by the ES per flow. The ES sends the CDR to the EG but will keep a local copy as long as an acknowledgement on the delivery has not been received. In case acknowledgement is received, the ES may retry transmitting the CDR following a configurable time out interval. Retries may continue for a configurable number of times until such acknowledgement is received. The EG may enrich the basic CDR with additional required fields it may receive from additional network elements and may format the CDR correctly. It may then either send it over the CGF immediately or save it to a file for a later delivery. Turning to Fig. 6, there is provided a table with a list and description of fields that may be part of the CDRs generated by the ES and the EG:

Functions, operations, components and/or features described herein with reference to one or more embodiments, may be combined or otherwise utilized with one or more other functions, operations, components and/or features described herein with reference to one or more other embodiments, or vice versa. While certain features of the invention have been illustrated and described herein, many modifications, substitutions, changes, and equivalents will now occur to those skilled in the art. It is, therefore, to be understood that the appended claims are intended to cover all such modifications and changes as fall within the true spirit of the invention.

## Claims

1. A communication network comprising:
at least one network core with one or more network elements to perform each of one or more network management functions; and
at least one network edge segment including: (a) one or more access nodes, (b) at least one edge computing resources, and (c) a secure link gateway to convey to the core network elements information about chargeable data services provided by the at least one edge computing resource to connected client devices.

2. The communication network of claim 1, wherein said at least one edge computing resource provides data services selected from the group consisting of: (a) application server data, (b) content server data, (c) data storage services, and (d) internet gateway services.

3. The communication network according to claim 1, wherein at least one of said one or more network elements performs a charging function.

4. The communication network according to claim 3, wherein said at least one network edge includes edge computing monitoring modules to characterize data services provided by said edge computing resource.

5. The communication network according to claim 4, wherein said edge computing monitoring modules is configured to send to said network core data characterizing services, including service volumes, provided by said edge computing resource.

6. A method of operating a communication network, said method comprising:
running at a network core one or more network elements to perform each of one or more network management functions; and
at an network edge segment including with one or more access nodes and at least one edge computing resources conveying to the core network elements information about chargeable data services provided by the at least one edge computing resource to connected client devices.

7. The method of claim 6, wherein provided chargeable data services are selected from the group consisting of: (a) application server data, (b) content server data, (c) data storage services, and (d) internet gateway services.

8. The method of claim 7, wherein the one network management functions performs at the network core is charging.

9. The method of claim 8, further including characterizing data services provided by the edge computing resources.

10. The method of claim 9, further comprising sending to said network core data characterizing services and volumes of services provided by the edge computing resource.
